# EUROPEAN PATENT SPECIFICATION

(11) **EP 2 830 886 B1**
(45) Date of publication and mention of the grant of the patent: **23.03.2016**
(21) Application number: 12713858.4
(22) Date of filing: 29.03.2012
(51) Int. Cl.: B42D 15/00

(54) **MULTILAYER SECURITY DOCUMENT WITH A CAVITY**
MEHRLAGIGES SICHERHEITSDOKUMENT MIT EINEM HOHLRAUM
DOCUMENT DE SÉCURITÉ MULTICOUCHE AVEC UNE CAVITÉ

(43) Date of publication of application: 04.02.2015
(73) Proprietor: Orell Füssli Sicherheitsdruck AG, 8003 Zürich (CH)
(72) Inventor: EICHENBERGER, Martin, CH-8702 Zollikon (CH); SAUTER, Dieter, CH-8953 Dietikon (CH)
(74) Representative: Engelbrecht, Christoph
(86) International application number: PCT/CH2012/000072
(87) International publication number: WO 2013/143008

(56) References cited:
- EP-A1- 2 322 356
- WO-A1-2011/138007
- WO-A2-03/089250
- DE-A1-102004 008 840
- DE-A1-102008 053 099
- DE-A1-102009 057 358

## Description

### Technical Field

The invention relates to the field of security documents, such as banknotes, passports, documents of value, certificates, etc. In particular, the invention relates to a security document having a substrate, wherein said substrate comprises at least a first and a second substrate layer.

### Background Art

WO 2004/076198 describes a security document having a substrate with several layers. Such multilayer documents increase the counterfeiting security of the document.

EP 2 332 356 describes a security document according to the preamble of claim 1 and having a cavity formed by two substrate layers.

### Disclosure of the Invention

It is an object of the present invention to provide a security document of this type having improved security properties.

This object is achieved by the security document of claim 1. Accordingly, the substrate comprises a first region where said first substrate layer is connected to said second substrate layer, and a second region where the first substrate layer is not connected to the second substrate layer.

In this context, the term "connected to" is understood to refer to a connection of the substrate layers in a direction perpendicular to the surface of the substrate. This connection can either be a direct connection (where the first substrate layer is directly laminated to the second substrate layer) or an indirect connection (with at least one intermediate substrate layer arranged between said first and said second substrate layer, wherein the first substrate layer as well as the second substrate layer are connected to the intermediate substrate layer(s)).

As it has been found, the claimed design helps to provide a variety of additional security features, which are described in more detail below.

In one advantageous embodiment, the first and/or second substrate layer is/are transparent or at least partially transparent at least a "subregion" of said second region. This makes it possible to observe optical effects generated by the interface region between the substrates. For example, if the first and the second substrate carry first and second patterns in the subregion, and if the mutual position of the first and the second patterns can be changed by deforming the substrate, e.g. by bending or by buckling the substrate, the interaction between the two patterns can be observed. This can lead to strong visual effects, e.g. if the patterns are periodic at least in part of said subregion at least along a first direction, in which case Moiré-type effects can be generated by appropriate patterning.

In another embodiment, the first substrate layer is diffusely scattering in at least part of a transparent or partially transparent subregion, and the second substrate layer carries a pattern in said subregion. In this case, the visibility of the second pattern can be modified by changing a distance between the first and said second substrate layer in the subregion.

At least one intermediate substrate layer is arranged in the first region between the first and the second substrate layer. The intermediate substrate layer comprises a gap or opening in the second region. In this manner, a cavity with the thickness of the intermediate layer can be formed between the first and the second substrate layer at the location of the gap or opening.

The height of such a cavity can be modified e.g. by applying pressure to the first and second substrate layer, which can e.g. generate optical effects using the pattern techniques mentioned above.

A foil is loosely arranged in the cavity.

In another advantageous embodiment, the security document comprises at least one loose particle between the first and the second substrate layer in the second region. In this context, the term "loose" is to be understood such that the particle is neither connected to the first nor to the second substrate layer and can move if the distance between the substrate layers is sufficiently large. Such a motion can be detected, e.g. optically or acoustically.

The present invention can be used in any type of security document, such as in banknotes and other documents of value, identification documents, vouchers, certificates, etc.

### Brief Description of the Drawings

The invention will be better understood and objects other than those set forth above will become apparent when consideration is given to the following detailed description thereof. Such description makes reference to the annexed drawings, wherein:
Fig. 1 shows a banknote as an example of a security document,
Fig. 2 shows a sectional view along line II-II of Fig. 1,
Fig. 3 shows a top view of the security feature when the substrate is undeformed,
Fig. 4 shows a top view of the security feature when the substrate is deformed,
Fig. 5 shows a sectional view of the security feature of a second embodiment,
Fig. 6 shows a top view of the security feature of the second embodiment when undeformed,
Fig. 7 shows a top view of the security feature when deformed,
Fig. 8 shows a sectional view of the security feature of a third embodiment and
Fig. 9 shows a sectional view of the security feature of a fourth embodiment.

### Modes for Carrying Out the Invention

### Definitions:

The term "paper" includes paper based on wood pulp as well as on cotton.

The term "adjacent" in respect to substrate layers, such as "a first substrate layer is adjacent to a second substrate layer" designates that two substrate layers are adjacent in a direction perpendicular to the substrate. However, adjacent layers may be separated by a thin interposed layer (such as an adhesive or a dye layer) having a thickness that is much smaller (in particular at least 10 times smaller. in particular at least 50 times smaller) than each of the substrate layers.

The term "transparent" designates a substrate layer that has a relative transmission of at least 50%, in particular at least 80%, for at least one wavelength in the UV-VIS-NIR spectral range between 300 nm and 10 µm, in particular in the visible spectral range between 400 nm and 800 nm

The term "non-transparent" designates a substrate layer, dye layer or other structure that has a relative transmission of less than 50%, in particular less than 20%, for at least one wavelength in the UV-VIS-NIR spectral range between 300 nm and 10 µm, in particular in the visible spectral range between 400 nm and 800 nm

The term "at least partially transparent" designates a substrate layer that has a relative transmission of at least 20%, in particular at least 50%, for at least one wavelength in the UV-VIS-NIR spectral range between 300 nm and 10 µm, in particular in the visible spectral range between 400 nm and 800 nm

The term "macrostructure" relates to a structure discernible by the naked eye, i.e. to a structure of objects (such as lines, dots, etc) of a size of at least 0.1 1 mm.

The term "diffusely scattering" for a substrate layer relates to a section of a layer that diffusely scatters light. A section is considered to be diffusely scattering if at least 50% of a parallel light beam of 500 nm perpendicularly incident on any part of the section is scattered into directions outside a cone with an opening angle of 10°.

### Embodiments:

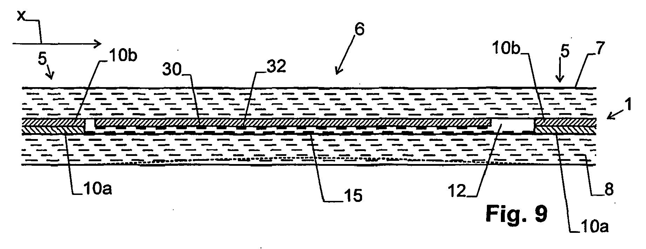

The invention according to claim 1 has a loose foil, which is present only in the embodiment of Fig. 9. The other embodiments helps to understand the invention as set out in the dependent claims.

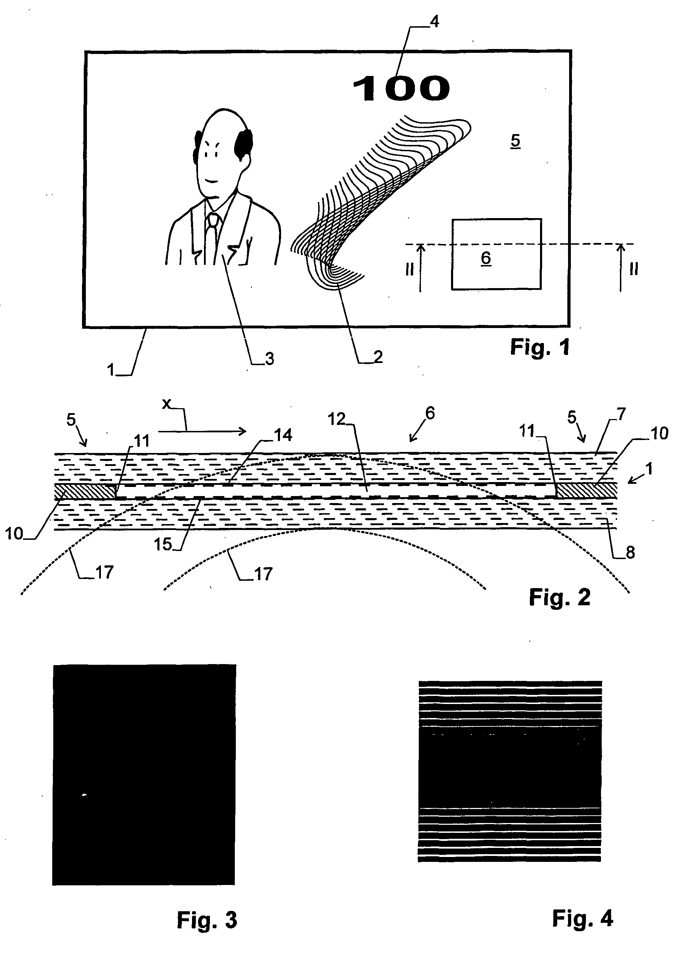

Fig. 1 shows a banknote as an example of a security document. The document comprises a substrate 1 carrying a plurality of markings, as known to the skilled person, such as security features 2, artwork 3 and textual information 4, which can e.g. be printed or applied in any other manner to substrate 1.

The security document of the present invention has a first region 5 and a second region 6, which are described in more detail below and which, together, advantageously cover the area of the whole security document

Fig. 2 shows a sectional view illustrating the structure of the security document in second region 6 and the surrounding parts of first region 5. As can be seen, substrate 1 comprises a first substrate layer 7 and a second substrate layer 8. In the first region 5, the first and second substrate layers are connected to each other in vertical direction (i.e. in the direction perpendicular to the substrate's surface) via an intermediate substrate layer 10. For example, first and second layers 7, 8 can be glued to opposite sides of intermediate substrate layer 10. Intermediate layer can be transparent or non-transparent. It can e.g. be a paper layer or a plastics layer.

In second region 6, the first and second substrate layers 7, 8 are not connected to each other. In the embodiment of Fig. 2, intermediate substrate layer 10 forms a gap or opening 11 in second region 6, such that a cavity 12 is formed between first and second substrate layer 7, 8.

In the embodiment of Figs. 1 and 2, both substrate layers 7, 8 are at least partially transparent at least in a subregion of second region 6. (In the shown embodiment, this subregion corresponds to all of second region 6, but it may also form only part thereof). In order to generate the effect that is now explained in reference to Figs. 3 and 4, at least first substrate layer 7 should be transparent or at least partially transparent.

Transparent or partially transparent layers of this type can e.g. be made of a plastics material.

Each substrate layer 7, 8 carries a pattern 14, 15, e.g. printed thereon. Advantageously, the first and second patterns 14, 15 comprise a macrostructure formed by highly absorbing and weakly absorbing areas. They can e.g. be formed by non-transparent ink. The patterns are periodic in a common direction x, advantageously with equal of nearly equal periodicities (the periodicities should advantageously differ by less than 10% for strong effects).

Advantageously, first pattern 14 is applied to the surface of first substrate layer 7 that faces second substrate layer 8, and second pattern 15 is applied to the surface of second substrate layer 8 that faces first substrate layer 7.

In the situation as shown in Fig. 2, where substrate 1 is undeformed, the patterns 14, 15 are e.g. arranged such that, together, they cover all of the transparent subregion, thus giving rise to a blacked out image as shown in Fig. 3. However, when substrate 1 is bent as indicated by dotted lines 17 in Fig. 1, one of the substrate layers 7, 8 is being stretched, such that the periodicity of the pattern applied to that layer varies. Thus, when viewing the document in this bent situation, transparent gaps become visible as shown in Fig. 4.

Hence, the security document allows to create a unique optical effect in second region 6 where the two substrate layers 7, 8 are not connected to each other.

As it will be understood by the skilled person, the macrostructures formed by patterns 14, 15 may vary and e.g. comprise concentric circles, Guilloche patterns, or a number of other motifs that give rise to visual effects when being mutually offset or stretched.

In the embodiment of Fig. 2, both substrate layers 7, 8 are at least partially transparent thus that the effect illustrated in Figs. 3 and 4 can be seen when viewing the document in transmission. However, the effect of Figs. 3 and 4 can still be observed in reflection when one of the substrate layer 7, 8 is non-transparent, and is e.g. made of paper.

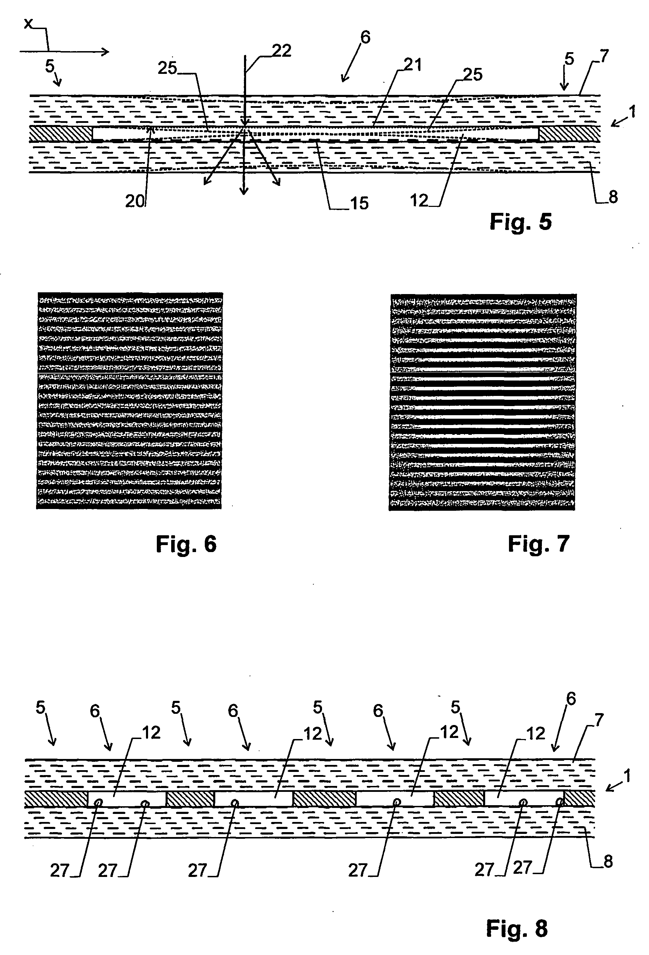

Fig. 5 shows a sectional view of second region 5 of a second embodiment of a security document. In this embodiment, again at least first substrate layer 7 is transparent or at least partially transparent. Second substrate layer 8 may also be transparent or at least partially transparent (as shown), but it may also be non-transparent. With the intermediate substrate layer 10 acting as a spacer, the two substrate layers 7, 8 are arranged at a distance from each other in second region 6, forming cavity 12 between them.

The inner surface 20 of first substrate layer 7, i.e. the surface that faces second substrate layer 8, is light scattering. For this purpose, inner surface 20 can e.g. be roughened or provided with a rough coating as indicated by small dots 21. Hence, a light beam 22 travelling through first substrate coating 7 is scattered at surface 20.

Second substrate layer 8 carries a pattern 15, which, by way of example, is shown to be a series of parallel dark stripes. Advantageously, pattern 15 is arranged at the surface of second substrate layer 8 that faces first substrate layer 7.

When viewing the document of Fig. 5 from the side of first substrate layer 7 while both substrate layers 7, 8 are in their undeformed states and therefore at a distance from each other, the scattering of the light at surface 20 will make it impossible to clearly see the stripes of pattern 15, i.e. only a blurred version of pattern 15 will be visible at best, such as shown in Fig. 6.

However, when the user deforms substrate 1 in order to bring the two substrate layers 7, 8 into contact with each other, e.g. by compressing the document in the center of second region 6 and bringing the first and second substrate layers 7, 8 into the shape as indicated by dotted lines 25, pattern 6 will appear more clearly because the scattering structure 21 is now closer to it. An image such as e.g. shown in Fig. 7 will appear, where the pattern 15 can be observed clearly at those locations where the two substrate layers 7, 8 are touching each other.

If second substrate layer 8 is transparent or partially transparent, but not scattering light, it will be noted that pattern 15 can always be observed clearly when viewing the substrate from the side of second substrate layer 8, while the image observed from the side of first substrate layer 7 will behave as shown in Figs. 6 and 7.

Yet another embodiment of the invention is shown in Fig. 8 This embodiment illustrates that second region 6 can be non-contiguous, i.e. there can be several regions where the two substrate layers 7, 8 are not interconnected. This can e.g. be achieved by providing a plurality of gaps or openings 11 in intermediate substrate layer 10. When bonding the first and second substrate layers 7, 8 to the opposite sides of intermediate substrate layers 10, these gaps or openings form a plurality of the cavities 12.

Such a design can be used in combination with any of the embodiments described above, but also in combination with another type of security feature that is based on loose particles 27 being arranged in the second region between the two substrate layers 7, 8, as shown in Fig. 8

In the embodiment of Fig. 8, several such loose particles are distributed over at least part of the cavities 12, such that several of the cavities 12 comprise at least one particle 27. This increases the robustness of the device: If one of the cavities 12 is damaged and looses its particle(s) 27, there remain other operative cavities that can be used for verification.

The loose particles advantageously have diameters smaller than the height of the cavities 12, thus that they can be relocated simply by shaking or moving the security document. If at least one of the substrate layers 7, 8 is transparent, the particles 27 can be observed visually. However, in another embodiment, both substrate layers 7, 8 can be non-transparent - in this case, the presence of the particles 27 can e.g. be detected by shaking the document and listening to the sound that the particles generate.

The shape of the cavities 12 can be selected from a wide range of shapes. For example, the cavities can be fairly large, with diameters over several mm or a few cm. In one embodiment, a cavity can e.g. have the shape of an hourglass with two enlarged regions joined by a narrow region, and the particles can be "poured" from one enlarged region into the other, just as in an hour glass.

In one advantageous embodiment, the cavities 12 have small diameters, e.g. of 5 mm or less, on order to make them more robust.

Fig. 9 shows an embodiment of the invention where a loose foil 30 is arranged in cavity 12. The foil is loose in the sense that it can be moved relatively to the first and second substrate layers 7, 8, in particular at least in a direction parallel to the surfaces of the substrate layers 7, 8. Such a movement can best be observed if at least one of the substrate layers 7, 8 is at least partially transparent. Alternatively, the movement can be observed by suitable sensing means: For example, if foil 30 is metallic, a metal detector can be used for detecting its position.

Foil 30 can be inserted between the substrate layers 7, 8 when the substrate layers 7, 8 are laminated to each other.

Alternatively, foil 30 can originally be part of the substrate layer 10 and be cut off from the same before or after lamination of the substrate layers 7, 8. For cutting off foil 30 after lamination, laser radiation can be used if the radiation has a wavelength that is only weakly absorbed by at least one of the substrate layer 7, 8, but strongly absorbed by foil 30. In that case, a laser beam can be sent through one of the substrate layers 7, 8 and be used to separate foil 30 from intermediate layer 10.

In an advantageous embodiment, and as shown in Fig. 9, there are at least two intermediate layers 10a, 10b. One of them, e.g. intermediate layer 10a, has an opening at the location of cavity 12, while the other has a section extending into cavity 12. That section is cut off, e.g. by means of laser irradiation, after lamination of the substrate layers 7, 8, as described in the previous paragraph.

In that case, foil 30 has a thickness equal to one of the intermediate layers, namely layer 10b, and this thickness is smaller than the height of cavity 12, such that foil 30 can move freely.

In order to readily observe a movement of foil 30, foil 30 is advantageously provided with a pattern, herein termed the foil pattern 32, which interferes with a pattern 15 applied to at least one of the substrate layers 7 or 8. The interference can e.g. be a Moiré-type interference. For this purpose, pattern 15 as well as foil pattern 32 can e.g. be periodic in a subregion and in at least in one direction, in particular with a periodicity of pattern 15 differing by less than 10% from a periodicity of foil pattern 32.

### Notes

Each of the substrate layers has advantageously a thickness between 20 µm and 200 µm, in particular between 40 µm and 150 µm, such that they retain good flexibility.

Advantageously, the first and second (and preferably all other) substrate layers should extend laterally (i.e. in the directions parallel to the surface of substrate 1) over the substantially the whole substrate, or they should at least cover 80% of the area of the substrate. Alternatively, the first and second substrate layers may be formed by two comparatively small patches applied to opposite sides of intermediate substrate layer 10, with intermediate substrate layer 10 extending substantially over the whole security documents and having an opening or openings at the location where the patches are applied.

As can be seen in the figures, second region 6 is advantageously surrounded completely by first region 5, i.e. the document does not comprise any edges where the first and second substrate layers 7, 8 are not connected to each other - this makes it more difficult to separate the substrate layers 7, 8.

In the embodiments above, an intermediate substrate layer 10 is arranged between the first and the second substrate layers 7, 8. Alternatively, the first and second substrate layers 7, 8 can be directly connected to each other in first region 5.

While there are shown and described presently preferred embodiments of the invention, it is to be distinctly understood that the invention is not limited thereto but may be otherwise variously embodied and practiced within the scope of the following claims.

## Claims

1. A security document comprising a substrate (1), wherein said substrate (1) comprises at least a first and a second substrate layer (7, 8), wherein said substrate (1) comprises a first region (5) where said first substrate layer (17) is connected to said second substrate layer (8) and a second region (6) where said first substrate layer (7) is not connected to said second substrate layer (8) and
wherein said security document further comprises at least one intermediate substrate layer (10) arranged in said first region (5) between said first and said second substrate layer (7, 8), wherein said intermediate substrate layer (10) comprises at least one gap or opening (11) in said second region (6), thereby forming a cavity (12) between said first and said second substrate layer (7, 8) in said gap or opening (11),
**characterized in that** said security document further comprises a foil (30) loosely arranged in said cavity (12).

2. The security document of claim 1 wherein at least said first substrate layer (7, 8) is transparent or at least partially transparent at least in a subregion of said second region (6), and in particular wherein said first and said second substrate layers (7, 8) are transparent or at least partially transparent at least in a subregion of said second region (6).

3. The security document of claim 2, wherein said first and/or said second substrate layer (7, 8) carry a first and/or a second pattern (14, 15), respectively, in said subregion.

4. The security document of claim 3 wherein said first and said second substrate layer carry said first and said second pattern (14, 15), respectively, and wherein a mutual position of said first and second patterns (14, 15) can be changed by deforming said substrate (1).

5. The security document of claim 4 wherein said patterns (14, 15) are periodic in at least part of said subregion at least in one direction, in particular with a periodicity of said first pattern (14) differing by less than 10% from a periodicity of said second pattern (15).

6. The security document of any of the claims 3 to 5, wherein said first substrate layer is diffusely scattering in at least part of said subregion and wherein said second substrate layer (7, 8) carries said second pattern (15) in said subregion, such that a visibility of said second pattern (15) can be modified by changing a distance between said first and said second substrate layer (7, 8) in said subregion.

7. The security document of claim 6 wherein said first substrate layer (7) comprises a light scattering structure (21) on an inner surface (20), wherein said inner surface (20) is facing said second substrate layer (8).

8. The security document of any of the preceding claims 3 to 7, wherein said first pattern (14) is applied to a surface of said first substrate layer (7) that faces said second substrate layer (8), and/or wherein said second pattern (15) is applied to a surface of said second substrate layer (8) that faces first substrate layer (7).

9. The security document of any of the preceding claims wherein said foil (30) carries a foil pattern (32) and at least one of said substrate layers (7, 8) carries a pattern (15), wherein said foil pattern (32) and said pattern (15) interfere when said foil (30) is moved.

10. The security document of any of the preceding claims comprising at least two intermediate substrate layers (10a, 10b) arranged in said first region (5) between said first and said second substrate layer (7, 8).

11. The security document of the claims 9 and 10 wherein said foil (30) has a thickness equal to one of said substrate layers (10a, 10b).

12. The security document of any of the preceding claims wherein said gap or opening (11) has a diameter of at least 1 mm, in particular of at least 10 mm.

13. The security document of any of the preceding claims comprising at least one loose particle (27) in a cavity (12) between said first and said second substrate layer in said second region (6).

14. The security document of any of the claims 11 or 12 and of claim 13 comprising a plurality of gaps or openings (11) forming a plurality of cavities (12) between the first and the second substrate layers (7, 8), and further comprising several loose particles (27) distributed over at least part of said cavities (12).

15. The security document of any of the claims 13 or 14, wherein said cavities (12) have diameters of 5 mm or less.

16. The security document of any of the preceding claims wherein each of said first and said second substrate layers (7, 8) has a thickness between 20 µm and 200 µm, in particular between 40 µm and 150 µm

17. The security document of any of the preceding claims wherein said second region (6) is completely surrounded by said first region (5).

## Patentansprüche

1. Ein Sicherheitsdokument umfassend ein Substrat (1), wobei das Substrat (1) mindestens eine erste und eine zweite Substratschicht (7, 8) umfasst, wobei das Substrat (1) einen ersten Bereich (5) umfasst, wo die erste Substratschicht (17) mit der zweiten Substratschicht (8) verbunden ist und einen zweiten Bereich (6) umfasst, wo die erste Substratschicht (17) mit der zweiten Substratschicht (8) nicht verbunden ist, und
wobei das Sicherheitsdokument weiter mindestens eine zwischengelagerte Substratschicht (10) umfasst, die im ersten Bereich (5) zwischen der ersten und der zweiten Substratschicht angeordnet ist, wobei die zwischengelagerte Substratschicht (10) mindestens eine Lücke oder Öffnung (11) im zweiten Bereich (6) umfasst und dadurch eine Ausnehmung (12) zwischen der ersten und der zweiten Substratschicht (7, 8) in der Lücke oder Öffnung bildet,
**dadurch gekennzeichnet, dass** das Sicherheitsdokument weiter eine Folie (30) umfasst, die locker in der Ausnehmung (12) angeordnet ist.

2. Das Sicherheitsdokument nach Anspruch 1, wobei mindestens die erste Substratschicht (7, 8) transparent oder mindestens teilweise transparent mindestens in einem Teilbereich des zweiten Bereichs (6) ist, und insbesondere wobei die erste und die zweite Substratschicht (7, 8) transparent oder mindestens teilweise transparent mindestens in einem Teilbereich des zweiten Bereichs (6) sind.

3. Das Sicherheitsdokument nach Anspruch 2, wobei die erste und/oder die zweite Substratschicht (7, 8) ein erstes und/oder ein zweites Muster (14, 15) im Teilbereich trägt bzw. tragen.

4. Das Sicherheitsdokument nach Anspruch 3, wobei die erste und eine zweite Substratschicht das erste bzw. das zweite Muster (14, 15) tragen, und wobei eine gegenseitige Position des ersten und des zweiten Musters (14, 15) durch Deformation des Substrats (1) geändert werden kann.

5. Das Sicherheitsdokument nach Anspruch 4, wobei die Muster (14, 15) mindestens in einem Teil des Teilbereichs mindestens in einer Richtung periodisch sind, insbesondere mit einer Periodizität des ersten Musters (14) die sich um weniger als 10% von einer Periodizität des zweiten Musters (15) unterscheidet.

6. Das Sicherheitsdokument nach einem der Ansprüche 3 bis 5, wobei die erste Substratschicht in mindestens einem Teil des Teilbereichs diffus streut und wobei die zweite Substratschicht (7, 8) das zweite Muster (15) im Teilbereich trägt, derart dass eine Sichtbarkeit des zweiten Musters (15) verändert werden kann, indem ein Abstand zwischen der ersten und der zweiten Substratschicht (7, 8) im Teilbereich geändert wird.

7. Das Sicherheitsdokument nach Anspruch 6, wobei die erste Substratschicht (7) eine lichtstreuende Struktur (21) auf einer inneren Oberfläche (20) umfasst, wobei die innere Oberfläche (20) der zweiten Substratschicht (8) zugewandt ist.

8. Das Sicherheitsdokument nach einem der Ansprüche 3 bis 7, wobei das erste Muster (14) auf eine Oberfläche der ersten Substratschicht (7), die der zweiten Substratschicht (8) zugewandt ist, appliziert wird, und/oder wobei das zweite Muster (15) auf eine Oberfläche der zweiten Substratschicht (8), die der ersten Substratschicht (7) zugewandt ist, appliziert wird.

9. Das Sicherheitsdokument nach einem der vorangehenden Ansprüche, wobei die Folie (30) ein Folienmuster (32) trägt und mindestens eine der Substratschichten (7, 8) ein Muster (15) trägt, wobei das Folienmuster (32) und das Muster (15) dann interferieren, wenn die Folie (30) bewegt wird.

10. Das Sicherheitsdokument nach einem der vorangehenden Ansprüche, umfassend mindestens zwei Zwischensubstratschichten (10a, 10b), die im ersten Bereich (5) zwischen der ersten und der zweiten Substratschicht (7, 8) angeordnet sind.

11. Das Sicherheitsdokument nach Anspruch 9 und 10, wobei die Folie (30) eine Dicke hat, die derjenigen von einer der Substratschichten (10a, 10b) gleicht.

12. Das Sicherheitsdokument nach einem der vorangehenden Ansprüche, wobei die Lücke oder Öffnung (11) einen Durchmesser von mindestens 1 mm, insbesondere von mindestens 10 mm, aufweist.

13. Das Sicherheitsdokument nach einem der vorangehenden Ansprüche, umfassend mindestens ein loses Partikel (27) in einer Ausnehmung (12) zwischen der ersten und der zweiten Substratschicht im zweiten Bereich (6).

14. Das Sicherheitsdokument nach einem der Ansprüche 11 oder 12 und nach Anspruch 13, umfassend eine Vielzahl von Lücken oder Öffnungen (11), die eine Vielzahl von Ausnehmungen (12) zwischen der ersten und der zweiten Substratschicht (7, 8) bilden, und weiter umfassend mehrere lose Partikel (27), die in mindestens einem Teil der Ausnehmungen (12) verteilt sind.

15. Das Sicherheitsdokument nach einem der Ansprüche 13 oder 14, wobei die Ausnehmungen (12) Durchmesser von 5 mm oder weniger haben.

16. Das Sicherheitsdokument nach einem der vorangehenden Ansprüche, wobei jede der ersten oder der zweiten Substratschicht (7, 8) eine Dicke zwischen 20 µm und 200 µm, insbesondere zwischen 40 µm und 150 µm, hat.

17. Das Sicherheitsdokument nach einem der vorangehenden Ansprüche, wobei der zweite Bereich (6) komplett vom ersten Bereich (5) umgeben ist.

## Revendications

1. Un document de sécurité comprenant un substrat (1), ledit substrat (1) comprenant au moins une première et une deuxième couche de substrat (7, 8), ledit substrat (1) comprenant une première région (5) ou ladite première couche de substrat (7) est connectée avec la deuxième couche de substrat (8) et une deuxième région (6) ou ladite première couche de substrat (7) n'est pas connectée avec la deuxième couche de substrat (8) et
ledit document de sécurité comprenant au moins une couche de substrat intermédiaire (10) arrangée dans la première région (5) entre la première et la deuxième couche de substrat (7, 8), ladite couche de substrat intermédiaire (10) comprenant au moins un écart ou une ouverture (11) dans ladite région (6), par cela formant une cavité (12) entre la première et la deuxième couche de substrat (7, 8) dans ledit écart ou ladite ouverture (11),
**caractérisé en ce que** ledit document de sécurité comprend en outre une feuille (30) arrangée faiblement dans ladite cavité (12).

2. Le document de sécurité selon la revendication 1, au moins ladite première couche de substrat (7, 8) étant transparente ou au moins partiellement transparente au moins dans une sous-région de ladite deuxième région (6), et particulièrement la première et la deuxième couche de substrat (7, 8) étant transparentes ou au moins partiellement transparentes au moins dans une sous-région de ladite deuxième région (6).

3. Le document de sécurité selon la revendication 2, la première et/ou la deuxième couche de substrat (7, 8) portant un premier et/ou un deuxième motif (14, 15) dans ladite sous-région.

4. Le document de sécurité selon la revendication 3, la première et la deuxième couche de substrat portant le premier et le deuxième motif (14, 15), et une position mutuelle dudit premier et deuxième motif (14, 15) pouvant être changée en déformant ledit substrat (1).

5. Le document de sécurité selon la revendication 4, lesdits motifs (14, 15) étant périodiques dans au moins une partie de ladite sous-région au moins dans une direction, particulièrement avec une périodicité dudit premier motif (14) qui diffère par moins de 10% d'une périodicité dudit deuxième motif (15).

6. Le document de sécurité selon l'une des revendications 3 à 5, ladite première couche de substrat dispersant de manière diffuse dans au moins une partie de ladite sous-région et ladite deuxième couche de substrat (7, 8) portant ledit deuxième motif (15) dans ladite sous-région, de sorte qu'une visibilité dudit deuxième motif (15) puisse être modifié en changeant une distance entre la première et la deuxième couche de substrat (7, 8) dans ladite sous-région.

7. Le document de sécurité selon la revendication 6, la première couche de substrat (7) comprenant une structure dispersant la lumière (21) ou une surface intérieure (20), ladite surface intérieure (20) étant en face de ladite deuxième couche de substrat (8).

8. Le document de sécurité selon l'une des revendications 3 à 7, ledit premier motif (14) étant appliqué à une surface de la première couche de substrat (7) qui est en face de ladite deuxième couche de substrat (8), et/ou ledit deuxième motif (15) étant appliqué à une surface de ladite deuxième couche de substrat (8) qui est en face de ladite première couche de substrat (7).

9. Le document de sécurité selon l'une des revendications précédentes, ladite feuille (30) portant un motif de feuille (32) et au moins une desdites couches de substrat (7, 8) portant un motif (15), ledit motif de feuille (32) et ledit motif (15) interférant quand la feuille (30) est déplacée.

10. Le document de sécurité selon l'une des revendications précédentes, comprenant au moins deux couches intermédiaires de substrat (10a, 10b) arrangées dans ladite première région (5) entre la première et la deuxième couche de substrat (7, 8).

11. Le document de sécurité selon les revendications 9 et 10, ladite feuille (30) ayant une épaisseur égale à une desdites couches de substrat (10a, 10b).

12. Le document de sécurité selon l'une des revendications précédentes, l'écart ou l'ouverture (11) ayant un diamètre d'au moins 1 mm, particulièrement d'au moins 10 mm.

13. Le document de sécurité selon l'une des revendications précédentes, comprenant au moins une particule libre (27) dans une cavité (12) entre la première et la deuxième couche de substrat dans ladite deuxième région (6).

14. Le document de sécurité selon l'une des revendications 11 ou 12 et la revendication 13, comprenant une pluralité d'écarts ou d'ouvertures (11) formant une pluralité de cavités (12) entre la première et la deuxième couche de substrat (7, 8), et de plus comprenant plusieurs particules libres (27) distribuées sur au moins une partie desdites cavités (12).

15. Le document de sécurité selon l'une des revendications 13 ou 14, lesdites cavités (12) ayant des diamètres de 5 mm ou moins.

16. Le document de sécurité selon l'une des revendications précédentes, chacune de la première et la deuxième couche de substrat (7, 8) ayant une épaisseur comprise entre 20 µm et 200 µm, particulièrement entre 40 µm et 150 µm.

17. Le document de sécurité selon l'une des revendications précédentes, ladite deuxième région (6) étant complètement entourée par la première région (5).
